# EUROPEAN PATENT APPLICATION

(11) **EP 4 693 801 A1**
(43) Date of publication of application: **11.02.2026**
(21) Application number: 24777707.1
(22) Date of filing: 12.03.2024
(51) Int. Cl.: H02J 7/00, H01H 47/00, B60L 53/18

(54) **CONNECTION CIRCUIT AND CHARGING GUN**

(30) Priority: 30.03.2023 CN 202310357517
(71) Applicant: BYD Company Limited, Shenzhen, Guangdong 518118 (CN)
(72) Inventor: LUO, Jianxing, Shenzhen, Guangdong 518118 (CN); CHEN, Bin, Shenzhen, Guangdong 518118 (CN); SHI, Lei, Shenzhen, Guangdong 518118 (CN); DANG, Yuyue, Shenzhen, Guangdong 518118 (CN)
(74) Representative: Mathys & Squire
(86) International application number: PCT/CN2024/081200
(87) International publication number: WO 2024/198917

(57) **Abstract**

A connection circuit and a charging gun having the connection circuit. The connection circuit is used for connecting an external power source and an electrical device to form a charge-discharge loop. The connection circuit comprises a power supply circuit, a control circuit, and a relay. The power supply circuit is connected to the external power source, and is used for converting the voltage of the external power source into a low voltage by means of power frequency transformation. The control circuit is connected to the power supply circuit, is used for acquiring the low voltage from the power supply circuit, and is configured to generate a control signal. The relay comprises an input side and an output side, the output side is arranged on the charge-discharge loop, and the input side is connected to the external power source and the control circuit and is configured to drive the output side to turn off or turn on the charge-discharge loop according to the control signal.

## Description

### CROSS-REFERENCE TO RELATED APPLICATIONS

The present disclosure claims priority to Chinese Patent Application No. 202310357517.5 filed on March 30, 2023, which is incorporated herein by reference in its entirety.

### FIELD

The present disclosure relates to the field of charging and discharging technologies, and in particular, to a connection circuit and a charging gun.

### BACKGROUND

Charging guns are usually equipped with connection circuits to connect power sources and electrical devices. The connection circuit mainly includes a power supply, relay, driver, chip, and auxiliary capacitor, among which the relay, driver, etc. are all powered by the power supply of the charging gun.

Due to the high requirements for power conversion, the current connection circuit has numerous components, resulting in a charging gun that is large in size, heavy in weight, and costly. When used, it is easy for there to be poor contact between the charging plug and the power socket, and it is also inconvenient to store.

### SUMMARY

The present disclosure is intended to solve at least one of the technical problems existing in the prior art. Therefore, the present disclosure provides a connection circuit and a charging gun that reduces the use of corresponding components, lowers costs, and reduces size.

In the first aspect, the present disclosure provides a connection circuit for connecting an external power supply and an electrical device to form a charge-discharge circuit. The connection circuit includes: a power supply circuit, which is connected to the external power supply for converting the voltage of the external power supply into a low voltage via power frequency transformation; a control circuit, which is connected to the power supply circuit for receiving the low voltage from the power supply circuit and is configured to generate a control signal; and a relay, which includes an input side and an output side, the output side is arranged on the charge-discharge circuit, the input side is connected to the external power supply and the control circuit, and is configured to drive the output side to break or conduct the charge-discharge circuit according to the control signal.

According to the connection circuit of the present disclosure, directly powering the relay from the external power supply allows the power supply circuit to only provide power to the control circuit, thereby reducing load on the power supply circuit, minimising components required in the power supply circuit, and lowering cost and size.

According to one embodiment of the present disclosure, the input side of the relay includes a driving circuit and a driving assembly, the driving circuit is connected to the control circuit, and the driving assembly is connected to an external power supply.

According to one embodiment of the present disclosure, the external power supply is used for outputting alternating current, and the relay is an AC-type relay.

According to one embodiment of the present disclosure, a first terminal of the driving assembly is connected to a live wire of the external power supply, and a second terminal of the driving assembly is connected to a first terminal of the driving circuit; a second terminal of the driving circuit is connected to a neutral line of the external power supply, and a third terminal of the driving circuit is connected to the control circuit.

According to an embodiment of the present disclosure, the power supply circuit includes a power frequency transformer, an input terminal of the power frequency transformer is connected to the external power supply, and an output terminal of the power frequency transformer is connected to the control circuit.

According to an embodiment of the present disclosure, the power supply circuit further includes a protection circuit, an input terminal of the protection circuit is connected to the external power supply, and an output terminal of the protection circuit is connected to the input terminal of the power frequency transformer.

According to one embodiment of the present disclosure, the protection circuit is composed of a thermistor and a TVS tube.

According to one embodiment of the present disclosure, the power supply circuit further includes: a voltage stabilization circuit, an input terminal of the voltage stabilization circuit is connected to the output side of the power frequency transformer, and an output terminal of the voltage stabilization circuit is connected to the control circuit.

In the second aspect, the present disclosure also provides a charging gun including the connection circuit according to any one of the above embodiments.

According to the charging gun of the present disclosure, directly powering the relay from the external power supply allows the power supply circuit to only provide power to the control circuit, thereby reducing load on the power supply circuit, minimising components required in the power supply circuit, and lowering cost and size.

According to one embodiment of the present disclosure, the charging gun includes a cable, a plug connected to a first end of the cable, and a charging gun head connected to a second end of the cable, and the connection circuit is integrated into the charging gun head.

Additional aspects and advantages of the present disclosure will be partially presented in the following description, some of which will become apparent from the following description, or learned through practice of the present disclosure.

### BRIEF DESCRIPTION OF THE DRAWINGS

The above and/or additional aspects and advantages of the present disclosure will become apparent and easily understood from the description of the embodiments in conjunction with the following figures, wherein:
FIG.1 is one of the structural block diagrams of the connection circuit provided in the embodiment of the present disclosure;
FIG.2 is a second structural block diagram of the connection circuit provided in the embodiment of the present disclosure;
FIG.3 is a structural block diagram of the connection circuit in the related art;
FIG.4 is a schematic structural diagram of the charging gun provided in the embodiment of the present disclosure;
FIG.5 is a schematic structure diagram of the charging gun in the related art.

### Reference number:

Connection circuit 100, power supply circuit 110, power frequency transformer 111, protection circuit 112, voltage stabilization circuit 113, high-frequency transformer 114, input protection circuit 115, EMC protection circuit 116, high-frequency rectification power control circuit 117, output circuit 118, control circuit 120, relay 130, input side 131, output side 132, drive circuit 133, drive assembly 134;
External power supply 200, electrical device 300, cable 400, plug 500, charging gun head 600, control box 700;
Live wire L, neutral wire N, ground wire PE.

### DETAILED DESCRIPTION

The following provides a detailed description of the embodiments of the present disclosure, examples of which are shown in the accompanying drawings, where the same or similar reference numerals throughout represent the same or similar elements or elements with the same or similar functions. The embodiments described below with reference to the accompanying drawings are exemplary and are only used to explain the present disclosure, and should not be construed as limiting the present disclosure.

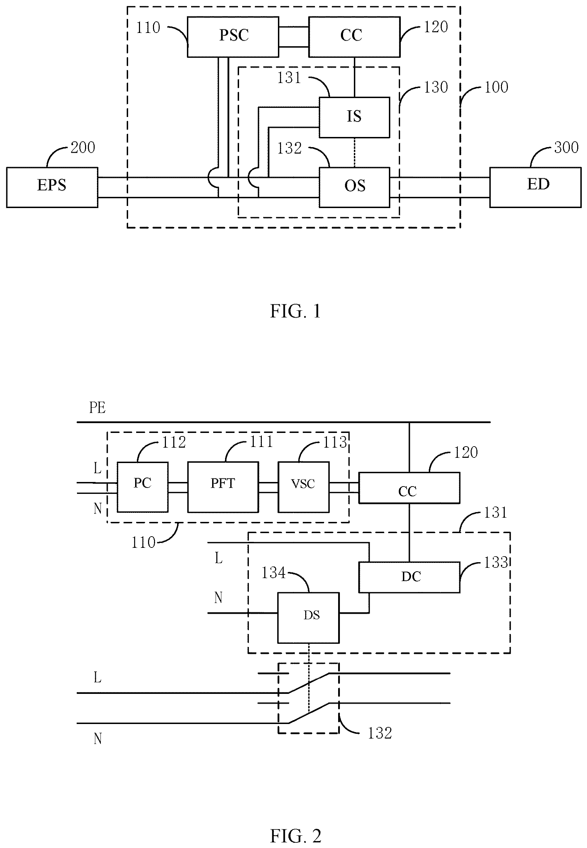

Referring to FIG. 1, FIG.1 shows a structural block diagram of a connection circuit. One embodiment of the present disclosure provides a connection circuit 100.

In this embodiment, the connection circuit 100 is used for connecting an external power supply (EPS) 200 and an electrical device (ED) 300 to form a charge-discharge circuit. The connection circuit 100 includes a power supply circuit (PSC) 110, a control circuit (CC) 120, and a relay 130. The power supply circuit 110 is connected to the external power supply 200 and is used for converting a voltage of the external power supply 200 into a low voltage via power frequency transformation. The control circuit 120 is connected to the power supply circuit 110 for receiving power from the power supply circuit 110, and is configured to generate a control signal; relay 130 includes an input side (IS) 131 and an output side (OS) 132. The output side 132 is arranged on the charge-discharge circuit, and the input side 131 is connected to the external power supply 200 and the control circuit 120. It is configured to drive the output side 131 to break or conduct the charge-discharge circuit according to the control signal.

It should be noted that the charge-discharge circuit includes an external power supply 200, an electrical device 300, and wires connected between the external power supply 200 and the electrical device 300. The output side 132 of relay 130 can be arranged on the wire, and it switches between a connected state and a disconnected state. When the output side 132 is in a connected state, the wire is connected to conduct the charge-discharge circuit; when the output side 132 is in the disconnected state, the wire is disconnected to break the charge-discharge circuit.

In this embodiment, the input side 131 of relay 130 can be connected to the external power supply 200 under the control of a control signal to receive power; or disconnect from the external power supply 200 to lose power. When the input side 131 is in a state of receiving power, the output side 132 is driven in a connected state; when the input side 131 in a state of losing power, the output side 132 is driven in a disconnected state. Alternatively, when the input side 131 is in a state of receiving power, the output side 132 is driven in a disconnected state; when the input side 131 in a state of losing power, the output side 132 is driven in a connected state.

In some embodiments, the relay 130 can be composed of components such as a coil, contacts, and an armature. Among them, the coil can be used as part of the input side 131, and the contacts and the armature can be used as part of the output side 132. The coil can drive the armature to make contact with different contacts when energized or de-energized, thereby switching between the connected state and the disconnected state.

In other embodiments, the input side 131 of relay 130 can also include a motor assembly. The motor assembly can drive the armature to make contact with different contacts when energized or de-energized, thereby switching between the connected state and the disconnected state.

In some embodiments, the power supply circuit 110 can be connected to the wire between the external power supply 200 and the electrical device 300 to receive power from the external power supply 200. The power supply circuit 110 can reduce the voltage of the power provided by the external power supply 200, and use the reduced power to supply electricity energy to the control circuit 120. The voltage provided by the external power supply 200 is usually high, such as 220V or 340V, while the control circuit 120 is a low-voltage circuit, and its power supply voltage is usually 12V, 5V, etc. To meet the power supply requirements of control circuit 120, voltage step-down is required. The power supply circuit 110 can include components such as a transformer to achieve the voltage step-down function.

The control circuit 120 can transmit control signals to the input side 131 of the relay 130 based on the predetermined control logic. Wherein, the control signal can be either high-level or low-level signals. When the control signal is at a high level, the input side 131 of relay 130 is connected to the external power supply 200 to receive power; when the control signal is at a low level, the input side 131 of relay 130 is disconnected from the external power supply 200, losing power. Alternatively, when the control signal is at a low level, the input side 131 of relay 130 is connected to an external power supply 200 to receive power; when the control signal is at a high level, the input side 131 of relay 130 is disconnected from the external power supply 200, losing power.

In some embodiments, the control circuit 120 can detect and display the state of the charge-discharge circuit. For example, the control circuit 120 can include a temperature detection circuit and a leakage detection circuit, etc. Alternatively, the control circuit 120 can also include an indicator light group, which can be used for indicating the normal or abnormal state of the charge-discharge gun.

In some embodiments, the control circuit 120 can transmit a control signal to the input side 131 of the relay 130 after detecting that the connection circuit 100 is connected to the external power supply 200 and the electrical device 300 respectively, thereby enabling the output side 132 of the relay 130 to conduct the charge-discharge circuit. Alternatively, when the control circuit 120 detects an abnormality in the external power supply 200 or the electrical device 300, it transmits a control signal to the input side 131 of the relay 130, thereby enabling the output side 132 of the relay 130 to break the charge-discharge circuit. The control principle and circuit structure of control circuit 120 are based on mature existing technologies, which will not be elaborated herein.

In the related art, the input side 131 of relay 130 is connected to the power supply circuit 110, and relay 130 is powered via the power supply circuit 110. In this case, the power supply circuit 110 needs to simultaneously supply power to both the control circuit 120 and the relay 130, with high output requirements (e.g., a power of approximately 1.2w and a current of 100mA), resulting in the need for a flyback power supply for the power supply circuit 110. However, since the flyback power supply operates at high frequencies, ensuring proper EMC (Electromagnetic Compatibility) and product stability necessitates the addition of various suppression components, such as electrolytic capacitors, common-mode chokes, varistors, Y-capacitors, and X-capacitors. This not only increases the overall size and cost but also compromises product reliability.

In this embodiment, by adjusting the power supply of relay 130 to directly use external power supply 200 for power supply, the load of power supply circuit 110 is reduced (e.g., a power of 0.025W and a current of 5mA). Enable the power supply circuit 110 to use low-frequency power supply, resulting in a simpler structure and fewer components.

In the present embodiment, the relay 130 needs to have a higher voltage tolerance compared to those used in the related art. For example, the input side 131 of relay 130 in this embodiment can receive higher voltages such as 220V or 340V. In contrast, the input side 131 of relay 130 in related technologies can receive lower voltages such as 12V or 24V.

According to the connection circuit 100 of the present disclosure, directly powering the relay 130 from the external power supply 200 allows the power supply circuit 110 to only provide power to the control circuit 120, thereby reducing load on the power supply circuit 110, minimising components required in the power supply circuit 110, and lowering cost and size..

Referring to FIG. 2, in some embodiments, the input side 131 of relay 130 includes a driving circuit 133 and a driving assembly (DS) 134. The driving circuit (DC) 133 is connected to the control circuit 120, and the driving assembly 134 is connected to an external power supply 200.

In this embodiment, the driving circuit 133 is connected to the driving assembly 134, and is used for controlling the driving assembly 134 to connect with the external power supply 200 under a control signal to receive power; or disconnect the driving assembly 134 from the external power supply 200 to lose power. When the driving assembly 134 is in a state of receiving power, the output side 132 is driven in a connected state; when the driving assembly 134 is in a state of losing power, the output side 132 is driven in a disconnected state. Alternatively, while the driving assembly 134 is in the state of receiving power, the output side 132 is driven in a disconnected state; when the driving assembly 134 is in a state of losing power, the output side 132 is driven in a connected state.

In some embodiments, the driving assembly 134 can be a coil or a motor assembly.

In some embodiments, the driving circuit 133 can include a switching element connected in series between the driving assembly 134 and the external power supply 200. The switching element can be closed or opened under the control of a control signal. When the switching element is closed, the driving assembly 134 is connected to the external power supply 200, and the driving assembly 134 receives power; when the switching element is disconnected, the driving assembly 134 is disconnected from the external power supply 200, and the driving assembly 134 loses power.

In some embodiments, the external power supply 200 is used for outputting alternating current, and the relay 130 is an AC-type relay.

It can be understood that the input side 131 of the AC-type relay is powered by an AC power source, and the main circuit carries alternating current. Wherein the voltage of AC voltage can be 220V or 340V, etc.

In other embodiments, the charge-discharge circuit can also be used for transmitting direct current, and accordingly, the relay 130 can also be a DC-type relay. The input side 131 of the DC-type relay is powered by a DC power source, and the main circuit passes direct current. Wherein the voltage of the DC power source can be 220V or 340V, etc.

In some embodiments, a first terminal of the driving assembly 134 is connected to the live wire L of the external power supply 200, and a second terminal of the driving assembly 134 is connected to a first terminal of the driving circuit 133; a second terminal of the driving circuit 133 is connected to the neutral line N of the external power supply 200, and a third terminal of the driving circuit 133 is connected to the control circuit 120.

In this embodiment, the driving circuit 133 switches between the connected state and the disconnected state of the first terminal and the second terminal according to the control signal received by the third end. For example, when the control signal is at a high level, the first terminal and the second terminal are connected; when the control signal is at a low level, the first terminal and the second terminal are disconnected. Alternatively, when the control signal is at a low level, the first terminal and the second terminal are connected; when the control signal is at a high level, the first and second terminals are disconnected.

In some embodiments, the driving circuit 133 can include a switching element, with a first terminal of the switching element serving as the first terminal of the driving circuit 133 connected to the second terminal of the driving assembly 134, and a second terminal of the switching element serving as the second terminal of the driving circuit 133 connected to the neutral wire N of the external power supply 200. When the switch element is closed, the driving assembly 134 is connected to the external power supply 200; when the switching element is open, the driving assembly 134 is disconnected from the external power supply 200.

In some embodiments, the switching element can include an optocoupler, a thyristor, or a combination of both. Both the optocoupler and the thyristor can be controlled a relatively small voltage signal to determine whether the driving assembly 134 is connected to AC power. In addition, the optocoupler can also achieve isolation between strong electricity and weak electricity, enhancing the stability of the system.

In some embodiments, the power supply circuit 110 includes a power frequency transformer 111, the input terminal of which is connected to an external power supply 200, and the output terminal of which is connected to a control circuit 120.

It can be understood that the power frequency transformer 111 is also called a low-frequency transformer to distinguish it from a high-frequency transformer used in switching power supplies. The operating frequency of the power frequency transformer 111 is generally the same as the frequency of the mains, such as 50HZ or 60Hz, etc.

In some embodiments, the power supply circuit 110 further includes a protection circuit (PC) 112, the input terminal of which is connected to an external power supply 200, and the output terminal of which is connected to the input terminal of a power frequency transformer (PFT) 111.

The protection circuit 112 can be used for detecting the power supply connected to the power frequency transformer 111, preventing overcurrent, overvoltage, or to limit current, in order to ensure the safety of the power frequency transformer 111.

In some embodiments, the protection circuit 112 can include an overcurrent protection circuit, an overvoltage protection circuit, or a current limiting circuit, etc. Wherein, the specific structure and principle of the overcurrent protection circuit, the overvoltage protection circuit or the current limiting circuit are based on mature existing technologies, which will not be elaborated herein.

In some embodiments, the protection circuit 112 is composed of a thermistor and a TVS tube.

In this embodiment, the thermistor can be used for forming an over-temperature detection circuit to provide over-temperature protection for the power frequency transformer 111. A thermistor is a type of sensor resistor whose resistance value changes with temperature. It is classified into positive temperature coefficient thermistor (PTC thermistor) and negative temperature coefficient thermistor (NTC thermistor) according to different temperature coefficients. The resistance value of a PTC thermistor increases with rising temperature, while the resistance value of a NTC thermistor decreases with rising temperature.

The TVS (Transient Voltage Suppressor) transistor can be used for providing overvoltage protection for power frequency transformer 111. When the two poles of a TVS diode are subjected to a reverse transient high-energy impact, it changes the high impedance between the two poles to low impedance at a speed of 10⁻¹²S, while absorbing surge power up to several kilowatts, thereby clamping the voltage between the two poles at a safe value and effectively protecting the power frequency transformer 111 from damage caused by surge pulses.

In some embodiments, the power supply circuit 110 further includes a voltage stabilization circuit (VSC) 113, the input terminal of which is connected to the output terminal of the power frequency transformer 111, and the output terminal of which is connected to the control circuit 120.

The voltage stabilization circuit 113 is used for stabilizing the power supply voltage output by the power frequency transformer 111 at the set value, to ensure that the control circuit 120 is connected to a stable power supply, thereby ensuring the stable operation of the control circuit 120.

In some embodiments, the voltage stabilization circuit 113 can use components such as a filtering capacitor or a voltage regulator chip. The relevant structure and principle of the voltage stabilization circuit 113 are based on mature existing technologies, which will not be elaborated herein.

In some embodiments, the connection circuit 100 is further equipped with a ground wire PE, and the control circuit 120 is connected to the ground wire PE. Due to the external power supply 200 being used for transmitting high-voltage power, the ground wire PE can prevent leakage current or electrostatic discharge from causing harm to users during charging and discharging process.

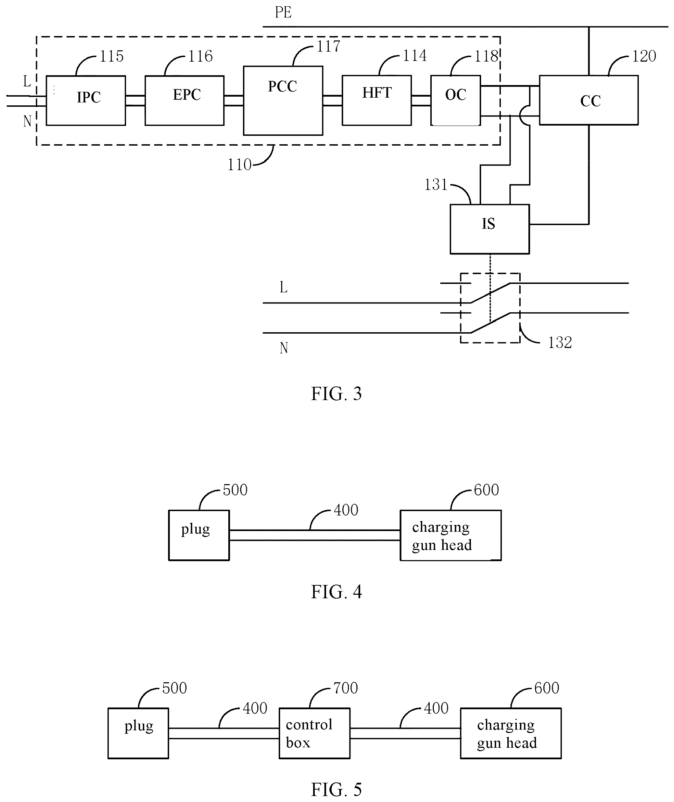

Referring to FIG. 3, in the related art, the power supply circuit 110 mostly uses a high-frequency transformer (HFT) 114 due to its substantial load capacity. The input terminal of the high-frequency transformer 114 is equipped with an input protection circuit (IPC) 115, an EMC protection circuit (EPC) 116, and a high-frequency rectification power control circuit (PCC) 117. The output terminal of the high-frequency transformer 114 supplies power to both the input side 131 of relay 130 and control circuit 120 via an output circuit (OC) 118. As evident, the power supply circuit 110 has a relatively high component count.

In this embodiment, since the relay 130 is directly powered by the external power supply 200, the power supply circuit 110 operates with a reduced load. This allows for the use of a low-frequency power frequency transformer 111. Compared to the high-frequency transformer 114, the power frequency transformer 111 exhibits lower radiation and disturbance levels, resulting in enhanced stability of the charging gun.

The power supply circuit 110 cannot be designed with an EMC (Electromagnetic Compatibility) circuit. Due to the low operating frequency and minimal interference of the power supply circuit 110, the practical effectiveness of an EMC circuit would be limited. Even without the EMC circuit, the power supply circuit 110 can maintain stable operation. This design approach additionally reduces component count, minimizing both physical size and production costs.

One embodiment of the present disclosure also provides a charging gun that includes the connection circuit 100 according to any one of the above embodiments.

In this embodiment, the connection circuit 100 is arranged inside the charging gun. The charging gun is used for connecting the external power supply 200 and the electrical device 300, where the external power supply 200 can be a discharging device. The specific structure and principle of the connection circuit 100 can refer to the above embodiments, and thus will not be further explained in detail in this embodiment.

According to the charging gun of the present disclosure, directly powering the relay 130 from the external power supply 200 allows the power supply circuit 110 to only provide power to the control circuit 120, thereby reducing load on the power supply circuit 110, minimising components required in the power supply circuit 110, and lowering cost and size.

Referring to FIG. 4, in some embodiments, the charging gun includes a cable 400, a plug 500 which is connected to a first end of the cable 400, and a charging gun head 600 which is connected to a second end of the cable 400. The connection circuit 100 is integrated into the charging gun head 600.

It can be understood that the plug 500 and the charging gun head 600 are equipped with connection terminals inside that are connected to the cable 400. The connection terminals inside the plug 500 are used for connecting the external power supply 200, and the connection terminals inside charging gun head 600 are used for connecting the electrical device 300. The external power supply 200 and the electrical device 300 are connected via cable 400 to form a charge-discharge circuit.

In some embodiments, the power supply circuit 110 and the input side 131 of the relay 130 are connected to the cable 400 for receiving power from the external power supply 200, and the output side 132 of the relay 130 is used for conducting or breaking the cable 400.

Referring to FIG. 5, in the related art, due to the large number and size of components in the connecting circuit 100, the connecting circuit 100 is typically housed in a separate control box 700. One end of control box 700 is connected to the plug 500 via the cable 400, and the opposite end of control box 700 is connected to the charging gun head 600 via the cable 400. When the charging gun is in use, the weight in the middle can easily cause poor contact between the plug 500 and the socket; it is also difficult to operate during storage. The connection circuit 100 of the embodiment is integrated into the charging gun head 600, which simplifies the components, facilitates use, and improves space utilization.

In some embodiments, the charging gun head 600 typically includes a housing and pins, etc. When designing the PCBA (Printed Circuit Board Assembly) for connection circuit 100, the shape of the circuit board is determined in accordance with the structural design of the charging gun head 600, so as to integrate the connection circuit 100 into the charging gun head 600. The fact that the connection circuit 100 has a small number of components makes it possible to integrate it into the charging gun head 600.

The terms "first", "second", etc. used in the description and claims of the present disclosure are intended to distinguish similar objects and not to describe a specific order or sequence. It should be understood that the data used in this way can be interchanged in appropriate circumstances, so that the embodiments of the present disclosure can be implemented in order other than those illustrated or described herein, and the objects distinguished by "first", "second", etc. are usually of the same class, without limiting the number of objects, for example, the first object can be one or multiple. In addition, in the description and claims, "and/or" represents at least one of the connected objects, and the character "/" generally indicates a "or" relationship between the related objects.

In the specification of this description, the reference to the terms "one embodiment", "some embodiments", "illustrative embodiments", "examples", "specific examples", or "some examples" means that the specific features, structures, materials, or characteristics described in conjunction with the embodiments or examples are included in at least one embodiment or example of the present disclosure. The illustrative expressions of these terms in this specification do not necessarily refer to the same embodiments or examples. Moreover, the specific features, structures, materials, or characteristics described can be combined in any one or more embodiments or examples in a suitable manner.

Although the embodiments of the present disclosure have been shown and described, those of ordinary skill in the art can understand that various changes, modifications, substitutions, and variations can be made to these embodiments without departing from the principles and purposes of the present disclosure, and the scope of the present disclosure is limited by the claims and their equivalents.

## Claims

1. A connection circuit (100), being used for connecting an external power supply (200) and an electrical device (300) to form a charge-discharge circuit, comprising:
a power supply circuit (110) being connected to the external power supply (200), and being used for converting a voltage of the external power supply (200) into a low voltage via power frequency transformation;
a control circuit (120) being connected to the power supply circuit (110), being used for receiving the low voltage from the power supply circuit (110) and being configured to generate a control signal; and
a relay (130) comprising an input side (131) and an output side (132), the output side (132) being arranged on the charge-discharge circuit, the input side (131) being connected to the external power supply (200) and the control circuit (120), and being configured to drive the output side (132) to break or conduct the charge-discharge circuit according to the control signal.

2. The connection circuit (100) according to claim 1, wherein an input side (131) of the relay (130) comprises a driving circuit (133) and a driving assembly (134), the driving circuit (133) being connected to the control circuit (120), and the driving assembly (134) being connected to the external power supply (200).

3. The connection circuit (100) according to claim 2, wherein the external power supply (200) is used for outputting AC power, and the relay (130) is an AC-type relay.

4. The connection circuit (100) according to claim 3, wherein a first terminal of the driving assembly (134) is connected to a live wire (L) of the external power supply (200), and a second terminal of the driving assembly (134) is connected to a first terminal of the driving circuit (133);
a second terminal of the driving circuit (133) is connected to a neutral line (N) of the external power supply (200), and a third terminal of the driving circuit (133) is connected to the control circuit (120).

5. The connection circuit (100) according to any one of claims 1 to 4, wherein the power supply circuit (110) comprises:
a power frequency transformer (111), an input terminal of the power frequency transformer (111) being connected to the external power supply (200), and an output terminal of the power frequency transformer (111) being connected to the control circuit (120).

6. The connection circuit (100) according to any one of claims 1 to 5, wherein the power supply circuit (110) further comprises:
a protection circuit (112), an input terminal of the protection circuit (112) being connected to the external power supply (200), and an output terminal of the protection circuit (112) being connected to the input terminal of the power frequency transformer (111).

7. The connection circuit (100) according to claim 6, wherein the protection circuit (112) is composed of a thermistor and a TVS tube.

8. The connection circuit (100) according to any one of claims 1 to 5, wherein the power supply circuit (110) further comprises:
a voltage stabilization circuit (113), an input terminal of the voltage stabilization circuit (113) being connected to an output side (132) of the power frequency transformer (111), and an output terminal of the voltage stabilization circuit (113) being connected to the control circuit (120).

9. A charging gun, comprising the connection circuit (100) according to any one of claims 1 to 8.

10. The charging gun according to claim 9, wherein the charging gun comprises a cable (400), a plug (500) being connected to a first end of the cable (400), and a charging gun head (600) being connected to a second end of the cable (400), and the connection circuit (100) being integrated into the charging gun head (600).
